# EUROPEAN PATENT APPLICATION

(11) **EP 1 529 566 A1**
(43) Date of publication of application: **11.05.2005**
(21) Application number: 04025430.2
(22) Date of filing: 26.10.2004
(51) Int. Cl.: B01J 27/26

(54) **Unsaturated tertiary alcohols as ligands for active DMC catalysts**

(30) Priority: 07.11.2003 US 703928
(71) Applicant: Bayer MaterialScience LLC, Pittsburgh PA 15205 (US)
(72) Inventor: Combs, George, McMurray PA 15317 (US)
(74) Representative: Perchenek, Nils, Dr.

(57) **Abstract**

The present invention provides an active double metal cyanide (DMC) catalyst made of a non-hexanitrometallate containing double metal cyanide compound, one or more unsaturated tertiary alcohols and about 0 to about 80 wt.%, based on the amount of catalyst, of a functionalized polymer having a number average molecular weight greater than about 200. Also provided are methods of producing the inventive catalysts. The inventive catalysts may find use in the production of polyols.

## Description

### FIELD OF THE INVENTION

The present invention relates in general to catalysis, and more specifically, to active double metal cyanide (DMC) catalysts with unsaturated tertiary alcohols as complexing ligands.

### BACKGROUND OF THE INVENTION

Double metal cyanide (DMC) complexes are well known in the art for catalyzing epoxide polymerization. Double metal cyanide (DMC) catalysts for the polyaddition of alkylene oxides to starter compounds, which have active hydrogen atoms, are described, for example, in U.S. Pat. No's. 3,404,109, 3,829,505, 3,941,849 and 5,158,922. These active catalysts yield polyether polyols that have low unsaturation compared to similar polyols made with basic (KOH) catalysis. The DMC catalysts can be used to make many polymer products, including polyether, polyester, and polyetherester polyols. The polyether polyols obtained with DMC catalysts can be processed to form high-grade polyurethanes (e.g., elastomers, foams, coatings and adhesives).

DMC catalysts are usually prepared by the reaction of an aqueous solution of a metal salt with an aqueous solution of a metal cyanide salt in the presence of an organic complexing ligand such as, for example, an ether. In a typical catalyst preparation, aqueous solutions of zinc chloride (in excess) and potassium hexacyanocobaltate are mixed, and dimethoxyethane (glyme) is subsequently added to the formed suspension. After filtration and washing of the catalyst with aqueous glyme solution, an active catalyst of formula:

Zn₃[Co(CN)₆]₂·xZnCl₂·yH₂O·zglyme

is obtained.

There has been a great deal of research devoted to the study of DMC catalysts since the original disclosure in U.S. Pat. No. 3,404,109, assigned to General Tire. Although this patent mentions that alcohols, including tert-butyl alcohol (TBA), ethers, esters, and other compounds are required as complexing agents to obtain active catalysts, subsequent investigations focused primarily on ethers such as glyme and diglyme for active catalyst preparations (U.S. 5,158,922).

The discovery that DMC catalysts made with tert-butyl alcohol (Japanese Kokai H4-145123) exhibited enhanced catalytic stability prompted a dramatic shift toward developments where TBA was the primary complexing ligand. The unique activity of TBA-based DMC catalysts has been continuously improving (U.S. Pat. Nos. 5,470,813; 5,482,908; 5,712,216; 5,783,513). Heretofore, efforts to achieve comparable results with other tertiary alcohols have only yielded DMC catalysts that perform similarly to glyme-based systems. Until the present time, it appeared that the enhancement in reactivity by t-butyl alcohol is unique because other similar alcohols such as tertiary amyl alcohol gave catalysts with a significantly diminished reactivity. In addition, polyols made with other tertiary alcohols have high unsaturation >0.15 meq/g and require larger amounts of these less active catalysts.

The patent literature is relatively silent as to the use of other tertiary alcohols as complexing ligands. WO 01/04182 A1 and U.S. Pat. No. 6,376,645, both assigned to Dow, mention unsaturated alcohols as a potential complexing agent in a hexanitrometallate modified DMC catalyst. However, no examples are provided in either reference where such a ligand is used and further, no mention is made of the suitability of the ligand in other types of DMC catalysts

As those skilled in the art are aware, even the best double metal cyanide (DMC) catalysts can be improved. Less expensive catalysts with increased activity always remain a desired goal. Therefore, a need exists in the art for a DMC catalyst made with a ligand other than TBA that has the same or better activity.

### SUMMARY OF THE INVENTION

Accordingly, the present invention provides active double metal cyanide (DMC) catalysts with unsaturated tertiary alcohols as complexing ligands. Surprisingly, the inventor has found that employing tertiary unsaturated alcohols, such as 2-methyl-3-butene-2-ol (MBE), as complexing agents results in catalysts that are at least comparable (even though no TBA is used) in activity and unsaturation of the polyols produced therewith to the activity and polyols produced with the state of the art DMC catalysts.

These and other advantages and benefits of the present invention will be apparent from the Detailed Description of the Invention herein below.

### BRIEF DESCRIPTION OF THE FIGURES

The present invention will now be described for purposes of illustration and not limitation in conjunction with the figures, wherein:
Figure 1 shows an infrared (IR) spectrum of a double metal cyanide (DMC) catalyst made with tert.-butanol as ligand; and
Figure 2 depicts an infrared (IR) spectrum of a double metal cyanide (DMC) catalyst made with 2-methyl-3-butene-2-ol (MBE) as the ligand.

### DETAILED DESCRIPTION OF THE INVENTION

The present invention will now be described for purposes of illustration and not limitation. Except in the operating examples, or where otherwise indicated, all numbers expressing quantities, percentages, functionalities and so forth in the specification are to be understood as being modified in all instances by the term "about."

The catalysts of the present invention are double metal cyanide (DMC) catalysts made from a non-hexanitrometallate containing double metal cyanide compound, one or more unsaturated tertiary alcohols and from 0 to 80 wt.%, based on the amount of catalyst, of a functionalized polymer having a number average molecular weight greater than 200.

Double metal cyanide (DMC) compounds useful in the present invention are the reaction products of a water-soluble metal salt and a water-soluble metal cyanide salt. The water-soluble metal salt preferably has the formula M(X)ₙ in which M is chosen from Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II), and Cr(III). More preferably, M is chosen from Zn(II), Fe(II), Co(II), and Ni(II). In the formula, X is preferably an anion chosen from halide, hydroxide, sulfate, carbonate, cyanide, oxalate, thiocyanate, isocyanate, isothiocyanate, carboxylate, and nitrate. The value of n is from 1 to 3 and satisfies the valency state of M. Examples of suitable metal salts include, but are not limited to, zinc chloride, zinc bromide, zinc acetate, zinc acetonylacetonate, zinc benzoate, zinc nitrate, iron(II) sulfate, iron(II) bromide, cobalt(II) chloride, cobalt(II) thiocyanate, nickel(II) formate, nickel(II) nitrate, and the like, and mixtures thereof.

The water-soluble non-hexanitrometallate containing metal cyanide salts used to make the double metal cyanide compounds preferably have the formula (Y)ₐ M'(CN)_{b} (A)_{c} in which M' is chosen from Fe(II), Fe(III), Co(II), Co(III), Cr(II), Cr(III), Mn(II), Mn(III), Ir(III), Ni(II), Rh(III), Ru(II), V(IV), and V(V). More preferably, M' is chosen from Co(II), Co(III), Fe(II), Fe(III), Cr(III), Ir(III), and Ni(II). The water-soluble metal cyanide salt can contain one or more of these metals. In the formula, Y is an alkali metal ion or alkaline earth metal ion. A is an ion chosen from halide, hydroxide, sulfate, carbonate, cyanide, oxalate, thiocyanate, isocyanate, isothiocyanate, and carboxylate. Both a and b are integers greater than or equal to 1; the sum of the charges of a, b, and c balances the charge of M'. Suitable water-soluble metal cyanide salts include, but are not limited to, potassium hexacyanocobaltate (III), potassium hexacyanoferrate(II), potassium hexacyanoferrate(III), calcium hexacyanocobaltate(III), lithium hexacyanocobaltate(III), and the like.

Examples of double metal cyanide compounds that can be used in the invention include, for example, zinc hexacyanocobaltate (III), zinc hexacyanoferrate(III), nickel hexacyanoferrate(II), cobalt hexacyanocobaltate(III), and the like. Further examples of suitable double metal cyanide complexes are listed in U.S. Pat. No. 5,158,922, the teachings of which are incorporated herein by reference. Zinc hexacyanocobaltate (III) is preferred.

The present invention employs one or more unsaturated tertiary alcohols as the complexing ligand. The term unsaturated is used herein to refer to any kind of unsaturation involving a carbon atom attached to the hydroxyl-bearing carbon of a tertiary alcohol. The tertiary unsaturated alcohols useful in the present invention may be designated by the formula (I) 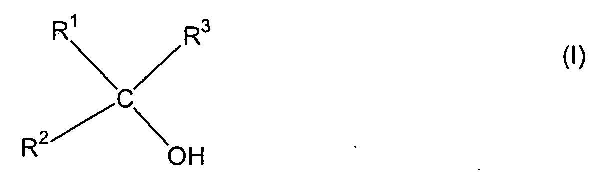 wherein
R¹ represents a group containing from two to twenty carbon atoms having at least one site of unsaturation, where an unsaturated carbon atom is attached to the hydroxyl-bearing carbon of (I). Atoms other than carbon and hydrogen may be present. R¹ may be an aromatic group.

R² represents a group containing from two to twenty carbon atoms having at least one site of unsaturation, where an unsaturated carbon is attached to the hydroxyl-bearing carbon of (I) or one to twenty carbon atoms free of any sites of unsaturation attached to the hydroxyl-bearing carbon (I). Atoms other than carbon and hydrogen may be present. R² may be an aromatic group.

R³ represents a group containing from two to twenty carbon atoms having at least one site of unsaturation, where an unsaturated carbon is attached to the hydroxyl-bearing carbon of (I) or one to twenty carbon atoms free of any sites of unsaturation attached to the hydroxyl-bearing carbon (I). Atoms other than carbon and hydrogen may be present.

The structure of one such unsaturated tertiary alcohol, 2-methyl-3-butene-2-ol (MBE), is given below:

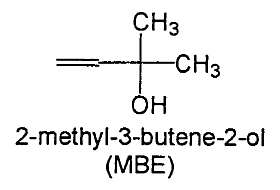

The DMC catalysts of the invention also include from zero to 80 wt.%, based on amount of catalyst, of a functionalized polymer having a number average molecular weight greater than 200. Functionalized polymers include polyethers, polyacrylates, polyamides, or other functionalized polymers such as described in U.S. Pat. No. 5,714,428, the entire contents of which is herein incorporated by reference thereto. Preferred catalysts include from 10 to 70 wt.% of the polymer; more preferred catalysts include from 15 to 60 wt.% of the polymer. Although at least 5 wt.% of the polymer may be needed to significantly improve the catalyst activity compared with a catalyst made in the absence of the polyether, catalysts within the scope of the invention may be made without any polymer. The polymer may be present in the catalyst of the present invention in an amount ranging between any combination of these values, inclusive of the recited values. Catalysts that contain more than 80 wt.% of the polymer generally are no more active, and they are impractical to isolate and use because they are typically sticky pastes rather than powdery solids.

Suitable functionalized polymers for use in the present invention include polyethers produced by ring-opening polymerization of cyclic ethers, and epoxide polymers, oxetane polymers, tetrahydrofuran polymers, and the like. Any method of catalysis may be used to make the polyethers. The polyethers can have any desired end groups, including, for example, hydroxyl, amine, ester, ether, or the like. Preferred polyethers are polyether polyols having average hydroxyl functionalities from 1 to 8 and number average molecular weights within the range of 1000 to 10,000, more preferably from 1000 to 5000. These are usually made by polymerizing epoxides in the presence of active hydrogencontaining initiators and basic, acidic, or organometallic catalysts (including DMC catalysts). Useful polyether polyols include monofunctional polyethers, poly(oxypropylene) polyols, poly(oxyethylene) polyols, EO-capped poly(oxypropylene) polyols, mixed EO-PO polyols, butylene oxide polymers, butylene oxide copolymers with ethylene oxide and/or propylene oxide, polytetramethylene ether glycols, and the like. Most preferred are poly(oxypropylene) polyols, particularly diols and triols having number average molecular weights within the range of 2000 to 4000.

The present invention also provides a method for preparing DMC catalysts useful for epoxide polymerization. The method involves preparing a DMC catalyst in the presence of a polymer having a number average molecular weight greater than 200, wherein the DMC catalyst contains from 0 to 80 wt.% of the polymer.

Briefly, the method involves reacting, in an aqueous solution, a metal salt (excess) and a metal cyanide salt in the presence of unsaturated tertiary alcohol and optionally polymer. Where included, enough of the polymer is used to give a DMC catalyst that contains from 0 to 80 wt.% of the polymer. Catalysts made using the method of the invention have enhanced activity for epoxide polymerization compared with similar catalysts prepared in the absence of the polymer.

In one method of the invention, aqueous solutions of a metal salt (such as zinc chloride) and a non-hexanitrometallate containing metal cyanide salt (such as potassium hexacyanocobaltate) are first reacted in the presence of unsaturated tertiary alcohol using efficient mixing to produce a catalyst slurry. The metal salt is used in excess. The catalyst slurry contains the reaction product of the metal salt and metal cyanide salt, which is the double metal cyanide compound. Also present are excess metal salt, water, and unsaturated tertiary alcohol; each is incorporated to some extent in the catalyst structure.

The unsaturated tertiary alcohol may be included with either or both of the aqueous salt solutions or it may be added to the catalyst slurry immediately following precipitation of the DMC compound. It is preferred to pre-mix the unsaturated tertiary alcohol with either aqueous solution, or both, before combining the reactants.

The aqueous metal salt and non-hexanitrometallate containing metal cyanide salt solutions (or their DMC reaction product) preferably may be mixed efficiently with the unsaturated tertiary alcohol to produce the most active form of the catalyst. A homogenizer or high-shear stirrer may conveniently be utilized to achieve efficient mixing.

The catalyst slurry produced in the first step may optionally be combined with a polymer having a number average molecular weight greater than 200. This second step is preferably performed using low-shear mixing. If very efficient mixing is used in this step, the mixture tends to thicken and coagulate, which complicates isolation of the catalyst. In addition, the catalyst often lacks the desired enhanced activity.

Third, the polymer-containing catalyst is isolated from the catalyst slurry. This is accomplished by any convenient means, such as filtration, centrifugation, or the like.

The isolated polymer-containing catalyst may then be washed with an aqueous solution that contains additional saturated tertiary alcohol. Washing may preferably be accomplished by reslurrying the catalyst in the aqueous solution of unsaturated tertiary alcohol, followed by a catalyst isolation step. This washing step removes impurities from the catalyst. Preferably, the amount of unsaturated tertiary alcohol used in this aqueous solution is within the range of 40 wt.% to 70 wt.%. It is also preferred to include some polymer in the aqueous solution of unsaturated tertiary alcohol. The amount of polymer in the wash solution is preferably within the range of 2 wt.% to 8 wt.%. Including a polymer in the wash step generally enhances catalyst activity.

Although a single washing step suffices to give a catalyst with enhanced activity, it is preferred to wash the catalyst more than once. The subsequent wash can be a repeat of the first wash. Preferably, the subsequent wash is non-aqueous, i.e., it includes only the unsaturated tertiary alcohol or a mixture of the unsaturated tertiary alcohol and polymer.

After the catalyst has been washed, it is preferred to dry it under vacuum (26 in. Hg to 30 in. Hg) until the catalyst reaches a constant weight. The catalyst can be dried at temperatures within the range of 40°C to 90°C.

### EXAMPLES

The present invention is further illustrated, but is not to be limited, by the following examples.

### Comparative Example C1

### Preparation of DMC Compound with tert-butyl alcohol (TBA)

The comparative catalyst is made in accordance with the procedures described in Example 13 of U.S. Patent 5,712,216.

### Example 2

### Preparation of DMC Compound with 2-methyl-3-butene-2-ol (MBE)

A 1L baffled round bottom flask was equipped with a mechanical paddle stirrer, heating mantle, and a thermometer. Distilled water (275 g) was added to the flask followed by of technical grade zinc chloride (27 g). Sufficient zinc oxide was added to bring the alkalinity of the system to 1.63% ZnO. The mixture was stirred at 400 rpm and heated to 50°C until all of the solid dissolved. Then, 2-methyl-3-butene-2-ol ("MBE", 46.5 g) was added to the solution and the temperature was maintained at 50°C.

A second solution was prepared with potassium hexacyanocobaltate (7.4 g) in 100 grams of distilled water. The potassium hexacyanocobaltate solution was added to the zinc chloride solution over a one-hour period. After addition was complete, stirring was continued for an additional 60 minutes at 50°C. A third solution of 1k diol (7.9 g), MBE (27.1 g), and water (14.9 g) was prepared and added to the flask at the end of the 60 minutes. The flask contents were stirred for an additional 3 minutes before the solid wet cake was collected by filtration. The filter cake was resuspended in a beaker with 78/22 (w/w) MBE/distilled water solution (100 g) using a homogenizer. The suspended slurry was transferred back to the initial reaction vessel and the beaker was rinsed with the 78/22 solution (72 g) to transfer all of the material. The slurry was stirred for 60 minutes at 400 rpm and 50°C. A 1k diol (2.0 g) was added to the flask and the slurry was stirred for 3 minutes. The mixture was filtered and the filter cake was resuspended in a beaker with MBE (123 g) using a homogenizer. The suspended slurry was transferred back to the initial reaction vessel and the beaker was rinsed with MBE (44 g) to transfer all of the material. The slurry was stirred for 60 minutes at 400 rpm and 50°C. Then a 1k diol (1.0 g) was added and the mixture was stirred for 3 more minutes. The slurry was filtered and the solids were collected to dry in a vacuum oven overnight at 40°C to 50°C. Final yield was 10.4 grams of dry powder. (Zn =22.9%, Co = 10.1 %, Cl = 4.0%)

### Example 3

### Preparation of DMC Compound with 2-Methyl-3-butyn-2-ol (MBY)

A 1L baffled round bottom flask was equipped with a mechanical paddle stirrer, heating mantle, and a thermometer. Distilled water (275 g) was added to the flask followed by technical grade zinc chloride (27 g). Sufficient zinc oxide was added to bring the alkalinity of the system to 1.63% ZnO. The mixture was stirred at 400 rpm and heated to 50°C until all of the solid dissolved. Then, 2-methyl-3-butyn-2-ol ("MBY", 45.4 g) was added to the solution and the temperature was maintained at 50°C.

A second solution was prepared with potassium hexacyanocobaltate (7.4 g) in distilled water (100 g). The potassium hexacyanocobaltate solution was added to the zinc chloride solution over a one hour period. After addition was completed, stirring was continued for an additional 60 minutes at 50°C. A third solution of 1k diol (7.9 g), MBY (30.8 g), and water (14.9 g) was prepared and added to the flask at the end of the 60 minute period. The flask contents were stirred for an additional 3 minutes before the solid wet cake was collected by filtration. The filter cake was resuspended in a beaker with 78/22 (w/w) MBY/distilled water solution (100 g) using a homogenizer. The suspended slurry was transferred back to the initial reaction vessel and the beaker was rinsed with 78/22 solution (72 g) to transfer all material. The slurry was stirred for 60 minutes at 400 rpm and 50°C. A 1k diol (2.0 g) was added to the flask and the slurry was stirred for 3 minutes. The mixture was filtered and the filter cake was resuspended in a beaker with the MBY (123 g) using a homogenizer. The suspended slurry was transferred back to the initial reaction vessel and the beaker was rinsed with MBY (44 g) to transfer all of the material. The slurry was stirred for 60 minutes at 400 rpm and 50°C. Then, 1k diol (1.0 g) was added and the mixture was stirred for 3 more minutes. The slurry was filtered and the solids were collected to dry in a vacuum oven overnight at 40°C to 50°C. Final yield was 11.6 grams of dry powder. (Zn =22.2%, Co = 9.9%, Cl = 4.2%)

### Comparative Example C4

### Preparation of DMC Compound with tert-amyl alcohol (TAA)

A 1L baffled round bottom flask was equipped with a mechanical paddle stirrer, heating mantle, and a thermometer. Distilled water (275 grams) was added to the flask followed by technical grade zinc chloride (38 g). Sufficient zinc oxide was added to bring the alkalinity of the system to 1.26% ZnO. The mixture was stirred at 400 rpm and heated to 50°C until all of the solid dissolved. Then, tert-amyl alcohol ("TAA", 45.4 g) was added to the solution and the temperature was maintained at 50°C.

A second solution was prepared with potassium hexacyanocobaltate (7.4 g) in distilled water (100 g). The potassium hexacyanocobaltate solution was added to the zinc chloride solution over a one hour period. After addition was completed, stirring was continued for an additional 60 minutes at 50°C. A third solution of 1k diol (7.9 g), TAA (31.5 g), and water (14.9 g) was prepared and added to the flask at the end of the 60 minute period. The flask contents were stirred for an additional 3 minutes before the solid wet cake was collected by filtration. The filter cake was resuspended in a beaker with 70/30 (w/w) TAA/distilled water solution (100 g) using a homogenizer. The suspended slurry was transferred back to the initial reaction vessel and the beaker was rinsed with 70/30 solution (72 g) to transfer all of the material. The slurry was stirred for 60 minutes at 400 rpm and 50°C. A 1k diol (2.0 g) was added to the flask and the slurry was stirred for 3 minutes. The mixture was filtered and the filter cake was resuspended in a beaker with TAA (123 g) using a homogenizer. The suspended slurry was transferred back to the initial reaction vessel and the beaker was rinsed with TAA (44 g) to transfer all of the material. The slurry was stirred for 60 minutes at 400 rpm and 50°C. Then, 1k diol (1.0 g) was added and the mixture was stirred for 3 more minutes. The slurry was filtered and the solids were collected to dry in a vacuum oven overnight at 40°C to 50°C. Final yield was 11.6 grams of dry powder. (Zn =21.9%, Co = 9.7%, Cl = 4.2%)

The data in Table I illustrate the superior performance of DMC catalysts made with unsaturated alcohols relative to their saturated counterpart, tert-amyl alcohol (TAA).

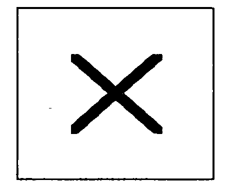

Both catalysts made with unsaturated alcohol ligands (Ex. 2 and Ex. 3) have a higher relative rate of oxide polymerization than the catalyst based on TAA (Ex. C4) and produce polyols with less unsaturation than those produced with the catalyst based on TAA.

**Table I**

| | **Ex. C1** | **Ex. 2** | **Ex.3** | **Ex.C4** |
|---|---|---|---|---|
| **Ligand** | TBA | MBE | MBY | TAA |
| **Relative Rate** | 1.0 | 0.67 | 0.61 | 0.40 |
| **OH# (mg KOH/g)** | 28.8 | 28.0 | 29.0 | 29.8 |
| **Unsaturation (meq/g)** | 0.0047 | 0.0070 | 0.0116 | 0.0163 |
| **Viscosity (cks)** | 1150 | 1211 | 1152 | 1186 |

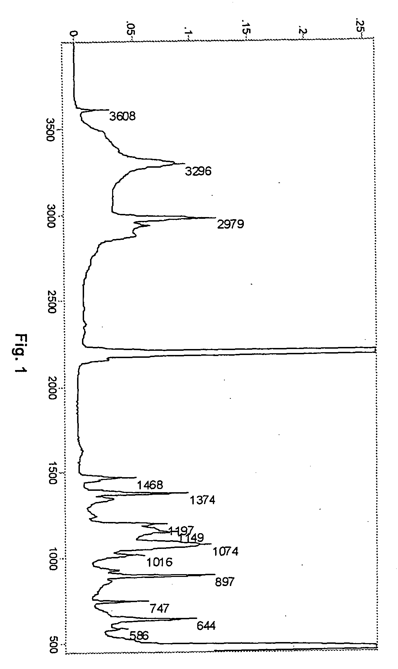

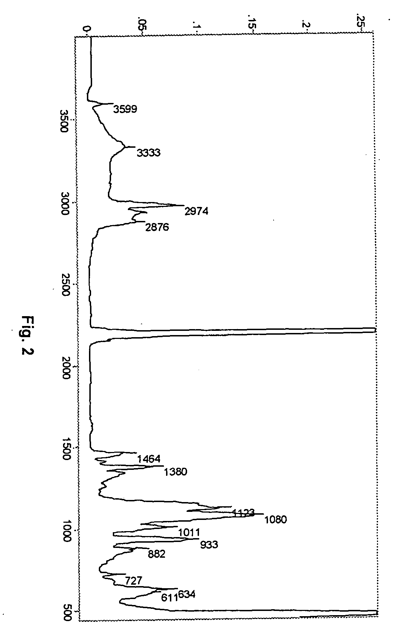

Catalysts derived from unsaturated tertiary alcohols are unique because they appear to incorporate alkalinity in the catalyst matrix under conditions where conventional saturated tertiary alcohols do not. DMC catalysts prepared from tert-amyl alcohol (TAA) exhibit propoxylation activity comparable to glyme along with high unsaturation. The characteristic peaks in the infrared spectrum associated with alkalinity incorporation for these catalysts are: MBE at 633 cm⁻¹, MBY at 639 cm⁻¹, and TAA at 643 cm⁻¹. MBE and MBY values for the alkalinity peak are outside the range disclosed in U.S Pat. No. 5,783,513 which teaches active DMC catalysts prepared by controlling zinc chloride alkalinity have peak at about 642 cm⁻¹ in their infrared spectrum. Infrared spectra are shown in Figure 1 for a double metal cyanide (DMC) catalyst made with tert.-butanol as ligand and Figure 2 for a double metal cyanide (DMC) catalyst made with 2-methyl-3-butene-2-ol (MBE).

The foregoing examples of the present invention are offered for the purpose of illustration and not limitation. It will be apparent to those skilled in the art that the embodiments described herein may be modified or revised in various ways without departing from the spirit and scope of the invention. The scope of the invention is to be measured by the appended claims.

## Claims

1. A double metal cyanide (DMC) catalyst comprising:
a non-hexanitrometallate containing double metal cyanide compound;
one or more unsaturated tertiary alcohols; and
about 0 to about 80 wt.%, based on the amount of catalyst, of a functionalized polymer having a number average molecular weight greater than about 200.

2. The catalyst according to Claim 1, wherein the double metal cyanide compound is a zinc hexacyanocobaltate.

3. The catalyst according to Claim 1, wherein the one or more unsaturated tertiary alcohols are of the formula (I), 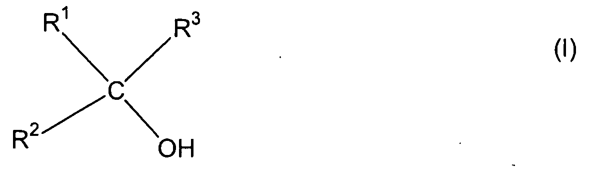 wherein
R¹ represents a group containing from two to twenty carbon atoms with at least one site of unsaturation, where an unsaturated carbon atom is attached to the hydroxyl-bearing carbon of (I) and wherein atoms other than carbon and hydrogen may be present,
R² represents a group containing from two to twenty carbon atoms with at least one site of unsaturation where an unsaturated carbon is attached to the hydroxyl-bearing carbon of (I) or one to twenty carbon atoms free of any sites of unsaturation attached to the hydroxyl-bearing carbon (I) and wherein atoms other than carbon and hydrogen may be present,
R³ represents a group containing from two to twenty carbon atoms with at least one site of unsaturation where an unsaturated carbon is attached to the hydroxyl-bearing carbon of (I) or one to twenty carbon atoms free of any sites of unsaturation attached to the hydroxyl-bearing carbon (I) and wherein atoms other than carbon and hydrogen may be present.

4. The catalyst according to Claim 1, wherein the unsaturated tertiary alcohol is 2-methyl-3-butene-2-ol (MBE).

5. The catalyst according to Claim 1, wherein the unsaturated tertiary alcohol is 2-methyl-3-butyn-2-ol (MBY).

6. The catalyst according to Claim 1, wherein the functionalized polymer is a polyether polyol having a number average molecular weight of about 1000 to about 10,000.

7. The catalyst according to Claim 1, wherein the functionalized polymer is a poly(oxypropylene) diol having a number average molecular weight of about 2000 to about 4000.

8. The catalyst according to Claim 1 containing about 5 to about 80 wt.% of the functionalized polymer.

9. The catalyst according to Claim 1 containing about 10 to about 70 wt.% of the functionalized polymer.

10. The catalyst according to Claim 1 containing about 15 to about 60 wt.% of the functionalized polymer.

11. A method of preparing a double metal cyanide (DMC) catalyst comprising reacting
an aqueous solution of a metal salt, and
an aqueous solution of a non-hexanitrometallate containing metal cyanide salt,
in the presence of
one or more unsaturated tertiary alcohols, and
a functionalized polymer having a number average molecular weight greater than about 200, wherein the DMC catalyst contains from about 0 to about 80 wt.% of the polymer.

12. The method according to Claim 11, wherein the DMC catalyst is a zinc hexacyanocobaltate.

13. The method according to Claim 11, wherein the one or more unsaturated tertiary alcohols are of the formula (I), 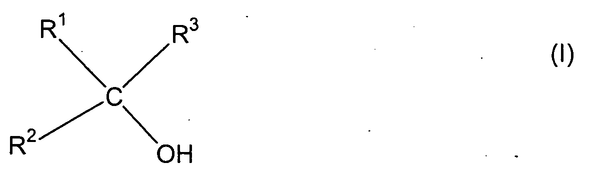 wherein
R¹ represents a group containing from two to twenty carbon atoms with at least one site of unsaturation where an unsaturated carbon atom is attached to the hydroxyl-bearing carbon of (I) and wherein atoms other than carbon and hydrogen may be present,
R² represents a group containing from two to twenty carbon atoms with at least one site of unsaturation where an unsaturated carbon is attached to the hydroxyl-bearing carbon of (I) or one to twenty carbon atoms free of any sites of unsaturation attached to the hydroxyl-bearing carbon (I) and wherein atoms other than carbon and hydrogen may be present,
R³ represents a group containing from two to twenty carbon atoms with at least one site of unsaturation where an unsaturated carbon is attached to the hydroxyl-bearing carbon of (I) or one to twenty carbon atoms free of any sites of unsaturation attached to the hydroxyl-bearing carbon (I) and wherein atoms other than carbon and hydrogen may be present.

14. The method according to Claim 11, wherein the unsaturated tertiary alcohol is 2-methyl-3-butene-2-ol (MBE).

15. The method according to Claim 11, wherein the unsaturated tertiary alcohol is 2-methyl-3-butyn-2-ol (MBY).

16. The method according to Claim 11, wherein the functionalized polymer is a polyether polyol having a number average molecular weight of about 200 to about 10,000.

17. The method according to Claim 11, wherein the functionalized polymer is a poly(oxypropylene) diol having a number average molecular weight of about 2000 to about 4000.

18. The method according to Claim 11, wherein the DMC catalyst contains about 5 to about 80 wt.% of the functionalized polymer.

19. The method according to Claim 11, wherein the DMC catalyst contains about 10 to about 70 wt.% of the functionalized polymer.

20. The method according to Claim 11, wherein the DMC catalyst contains about 15 to about 60 wt.% of the functionalized polymer.

21. A method of preparing a double metal cyanide (DMC) catalyst, said method comprising:
reacting aqueous solutions of a metal salt and a non-hexanitrometallate containing metal cyanide salt, said metal salt being in excess compared with the amount of metal cyanide salt, in the presence of one or more unsaturated tertiary alcohols with efficient mixing to produce a catalyst slurry;
combining the catalyst slurry with a functionalized polymer having a number average molecular weight greater than about 200;
isolating a polymer-containing solid catalyst from the slurry;
washing the polymer-containing solid catalyst with an aqueous solution that contains additional unsaturated tertiary alcohol; and
recovering a double metal cyanide (DMC) catalyst containing about 0 to about 80 wt.%, based on the amount of the DMC catalyst, of the polymer.

22. The method according to Claim 21, wherein the double metal cyanide catalyst is a zinc hexacyanocobaltate.

23. The method according to Claim 21, wherein the one or more unsaturated tertiary alcohols are of the formula (I), 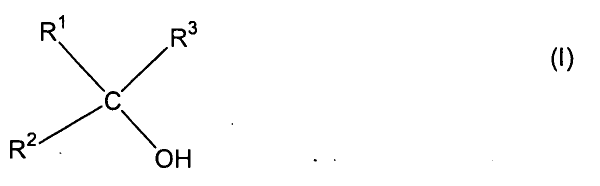 wherein
R¹ represents a group containing from two to twenty carbon atoms with at least one site of unsaturation where an unsaturated carbon atom is attached to the hydroxyl-bearing carbon of (I) and wherein atoms other than carbon and hydrogen may be present,
R² represents a group containing from two to twenty carbon atoms with at least one site of unsaturation where an unsaturated carbon is attached to the hydroxyl-bearing carbon of (I) or one to twenty carbon atoms free of any sites of unsaturation attached to the hydroxyl-bearing carbon (I) and wherein atoms other than carbon and hydrogen may be present,
R³ represents a group containing from two to twenty carbon atoms containing at least one site of unsaturation where an unsaturated carbon is attached to the hydroxyl-bearing carbon of (I) or one to twenty carbon atoms free of any sites of unsaturation attached to the hydroxyl-bearing carbon (I) and wherein atoms other than carbon and hydrogen may be present.

24. The method according to Claim 21, wherein the unsaturated tertiary alcohol is 2-methyl-3-butene-2-ol (MBE).

25. The method according to Claim 21, wherein the unsaturated tertiary alcohol is 2-methyl-3-butyn-2-ol (MBY).

26. The method according to Claim 21, wherein the functionalized polymer is a polyether polyol having a number average molecular weight of about 200 to about 10,000.

27. The method according to Claim 21 wherein the polyether is a poly(oxypropylene) diol having a number average molecular weight of about 2000 to about 4000.

28. The method according to Claim 21, wherein the catalyst slurry is combined with the polyether by low-shear mixing.

29. The method according to Claim 21, wherein the aqueous solution of unsaturated tertiary alcohol in the step of washing also includes additional polymer.

30. The method according to Claim 29, wherein, after the step of washing, the catalyst is re-washed with additional unsaturated tertiary alcohol.

31. The method according to Claim 30, wherein the unsaturated tertiary alcohol further includes a polymer.

32. In a process for the production of a polyol by polyaddition of alkylene oxides onto starter compounds containing active hydrogen atoms, the improvement comprising conducting the polyaddition in the presence of the double metal cyanide (DMC) catalyst comprising a non-hexanitrometallate containing double metal cyanide compound, one or more unsaturated tertiary alcohols and about 0 to about 80 wt.%, based on the amount of catalyst, of a functionalized polymer having a number average molecular weight greater than about 200.

33. The process according to Claim 32, wherein the DMC catalyst is a zinc hexacyanocobaltate.

34. The process according to Claim 32, wherein the one or more unsaturated tertiary alcohols are of the formula (I), 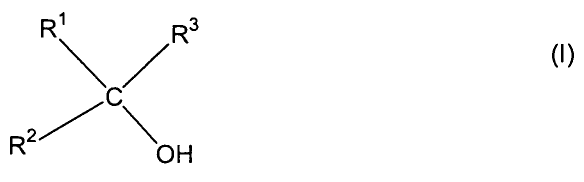 wherein
R¹ represents a group containing from two to twenty carbon atoms with at least one site of unsaturation where an unsaturated carbon atom is attached to the hydroxyl-bearing carbon of (I) and wherein atoms other than carbon and hydrogen may be present,
R² represents a group containing from two to twenty carbon atoms with at least one site of unsaturation where an unsaturated carbon is attached to the hydroxyl-bearing carbon of (I) or one to twenty carbon atoms free of any sites of unsaturation attached to the hydroxyl-bearing carbon (I) and wherein atoms other than carbon and hydrogen may be present,
R³ represents a group containing from two to twenty carbon atoms with at least one site of unsaturation where an unsaturated carbon is attached to the hydroxyl-bearing carbon of (I) or one to twenty carbon atoms free of any sites of unsaturation attached to the hydroxyl-bearing carbon (I) and wherein atoms other than carbon and hydrogen may be present.

35. The process according to Claim 32, wherein the unsaturated tertiary alcohol is 2-methyl-3-butene-2-ol (MBE).

36. The process according to Claim 32, wherein the unsaturated tertiary alcohol is 2-methyl-3-butyn-2-ol (MBY).

37. The process according to Claim 32, wherein the functionalized polymer is a polyether polyol having a number average molecular weight of about 200 to about 10,000.

38. The process according to Claim 32, wherein the functionalized polymer is a poly(oxypropylene) diol having a number average molecular weight of about 2000 to about 4000.

39. The process according to Claim 32, wherein the DMC catalyst contains about 5 to about 80 wt.% of the functionalized polymer.

40. The process according to Claim 32, wherein the DMC catalyst contains about 10 to about 70 wt.% of the functionalized polymer.

41. The process according to Claim 32, wherein the DMC catalyst contains about 15 to about 60 wt.% of the functionalized polymer.
